# EUROPÄISCHE PATENTSCHRIFT

(11) **EP 2 886 985 B1**
(45) Veröffentlichungstag und Bekanntmachung des Hinweises auf die Patenterteilung: **14.02.2018**
(21) Anmeldenummer: 14196754.7
(22) Anmeldetag: 08.12.2014
(51) Int. Cl.: F26B 23/02, F02C 6/18

(54) **Trocknungsanlage und Verfahren dafür**
Drying assembly and method for same
Installation de séchage et son procédé

(30) Priorität: 17.12.2013 DE 202013105737 U
(43) Veröffentlichungstag der Anmeldung: 24.06.2015
(73) Patentinhaber: MECOPLAN GmbH, 50679 Köln (DE)
(72) Erfinder: Granrath, Michael, 50678 Köln (DE)
(74) Vertreter: Hansen, Jochen

(56) Entgegenhaltungen:
- WO-A1-2013/083837
- DE-A1-102008 034 746
- DE-A1-102010 006 550
- DE-T2- 69 703 975

## Beschreibung

Die Erfindung betrifft eine Trocknungsanlage mit Wärmequelle, Trocknungsraum und Abluftreinigung, wobei die Wärmequelle eine Gasturbine mit Abgasleitung ist und vom Trocknungsraum eine Verbrennungsluftleitung zu der Gasturbine führt, wobei die Abluftreinigung durch das Mitverbrennen der abzureinigenden Bestandteile stromabwärtig des Trockenraums in der Gasturbine erfolgt und in der Abgasleitung ein vierter Wärmetauscher angeordnet ist, der Wärme auf ein HT-Netz überträgt und das HT-Netz den Trocknungsraum beheizt, wobei eine zweite Frischluftzufuhr für den Trocknungsraum vorgesehen ist und in der Verbrennungsluftleitung stromabwärtig des Trockenraums ein Abluftwäscher vorgesehen ist sowie in der Verbrennungsluftleitung stromabwärtig des Trockenraums ein erster Wärmetauscher zum Kühlen der Verbrennungsluft vorgesehen ist, wobei am ersten Wärmetauscher ein erster Kühlkreislauf anliegt.

Ferner betrifft die Erfindung ein Trocknungsverfahren in einer Trocknungsanlage für Lackierereien, bei dem die zum Trocknen erforderliche Wärme mit einer Gasturbine erzeugt wird, wobei ein Trocknungsraum der Trocknungsanlage indirekt hydraulisch beheizt und mit der Antriebsleistung der Gasturbine elektrischer Strom generiert wird, und die beim Trocknen entstehende Austauschluft mit den darin aufgenommenen, abzureinigenden Bestandteilen der Gasturbine als Verbrennungsluft zugeführt wird, wobei die Verbrennungsluft vor dem Zuführen zur Gasturbine gewaschen wird.

Trocknungsanlagen sind beispielsweise bei Autolackierereien bekannt, bei denen die frisch lackierten Kraftfahrzeugkarossen durch einen Trockenraum geführt werden. An den lackierten Teilen werden darin Temperaturen von 140°C bis 180°C erreicht. Beim Trocknungsvorgang werden gasförmige, gesundheitsschädliche Stoffe entsprechend der eingesetzten organischen Lösungsmittel im aufgetragenen Lack freigesetzt. Diese werden abgesogen und einer thermischen Nachverbrennung zugeführt.

Derartige Anlagen erfordern einen erheblichen Wärmeenergiebedarf. Entsprechend wurden Verfahren zur Energieeinsparung vorgeschlagen, wie beispielsweise aus der DE 10 2008 034 746 A1 bekannt. Interessant sind dabei eine besondere Führung des Frischluftstromes als Wärmeisolator für die Außenhaut der thermischen Nachverbrennungsanlage und die Verwendung der aus der thermischen Nachverbrennungsanlage austretenden heißen Abgase zur Beheizung des Trocknungsraumes.

Ferner ist aus der EP 1 813 866 B1 ein Verfahren zur Aufbereitung einer flüchtigen organischen Verbindung durch Verwendung einer Gasturbine bekannt, bei dem ein Dampfgemisch mit aufbereitetem Gas mit flüchtigen organischen Verbindungen in einer Brennkammer einer Gasturbine verbrannt wird. Dabei wird mit der Gasturbine die erforderliche Druckluft erzeugt.

Die JP 2005-090901 A betrifft ein Energieversorgungssystem mit einer zusätzlichen Ausnutzung der Abwärme für einen Trockungsprozess. Dabei wird in einem Trockenraum ein Reststoff-Abfall mit einer relativen Feuchte von beispielsweise 80 %, insbesondere Klärschlamm durch den Abgasstrom getrocknet. Der dann getrocknete Abfall wird mit einer Restfeuchte von beispielsweise 7 % einem Verbrennungsofen zugeführt. Ferner werden die Abgase, die aus dem Trockenraum herauskommen über einen Pfad dem Brenner des Abfallverbrennungsbehälters zusammen mit Brennstoffen zugeführt.

Duftende Komponenten der Abgase werden auch über eine Leitung als Verbrennungsluft der Turbine rückgeführt, wobei die duftenden Komponenten durch Pyrolyse in der Gasturbine zersetzt werden und somit ein unangenehmer Geruch vermieden wird.

Die JP 2007-021333 A betrifft ein Schlammeindickungssystem. Diese Anlage hat den prinzipiellen Aufbau wie die Anlage gemäß JP 2005-090901 A, wobei die Schlammtrocknungsvorrichtung mit einem zusätzlichen Gasbrenner direkt am Abgasweg der Gasturbine angeordnet ist. In dem Trockner wird Schlammkuchen hoher Feuchtigkeit getrocknet, beispielsweise auf einen Feuchtigkeitsgehalt von 35 % oder weniger und als fester und trockener Kuchen ausgegeben. Dabei soll die Rückführung des Verbrennungsgases aus der Gasturbine zu einer Reduzierung des Gasverbrauchs im Heizbrenner führen. Der getrocknete Kuchen kann beispielsweise für den Gartenbau direkt oder geformt und gebrannt als Mauerstein verwendet werden.

Die JP 2007-298192 A betrifft ein Kraft-Wärmekopplungssystem mit einer Gasturbine und ein Verfahren zu seiner Verwendung. Im System ist eine Rückführung eines Teils der Verbrennungsgase in die Turbinenverbrennungsluft über ein Gebläse verwirklicht. In einem Trockenmittelluftkonditionierer wird in diesem Fall zu klimatisierende (kühlende) Raumluft so getrocknet, dass die Raumluft durch einen Behälter mit Trockenmittel geführt wird, wobei das Trockenmittel durch einen ca. 150 °C heißen Abgasstrom unter Aufnahme der im Trockenmittel aufgenommenen Feuchtigkeit geführt wird.

In diesem System wird also in dem Sinne kein Trockenraum beheizt, sondern lediglich Raumluft für eine Abkühlung getrocknet, wobei eine Feuchtigkeitsaufnahme bis zur Sättigung der in die Turbine rückzuführenden Verbrennungsgase bewusst zur Leistungssteigerung vorgenommen wird.

Die DE 697 03 975 T2 beschreibt ein Verfahren zur Behandlung und energetischen Verwertung von Klärschlamm durch Trocknung und anschließende Verbrennung der getrockneten Substanz in einer Müllverbrennungsanlage. Dabei sind zwei getrennte Vorrichtungen zur thermischen Trocknung vorgesehen. In der einen Trocknungsvorrichtung werden die Abgase einer Gasturbine zur Trocknung durchgeleitet und an die Umgebung abgegeben. In der anderen Trocknungsvorrichtung wird die in der Gasturbine erzeugte Wärme indirekt über ein Hochtemperaturnetz hydraulisch übertragen. Die aus diesem Trockner abziehenden Brüden werden gereinigt und der Gasturbine zusammen mit einem Brennstoff zugeführt.

Aus der DE 10 2010 006 550 A1 ist eine Vorrichtung zum Trocknen von Gegenständen, insbesondere für Lackierstraßen, bekannt, bei der die Abluft aus der Trocknungsanlage den Prozess zur thermischen Nachverbrennung der in der Abluft befindlichen Lösungsmittel ausgestaltet ist. Hierbei wird jedoch ein Gasbrenner verwendet.

Die WO 2013/083837 A1 beschreibt ein Verfahren zum Trocknen von Schlamm, bei dem in einem thermischen Trockner und zwischen diesem thermischen

Trockner und einer Mischvorrichtung Feuchtigkeit aufnehmende Luft zirkuliert. Diese Luft wird zum einen durch Zumischen von in einem Blockheizkraftwerk gebildeten Abgas erwärmt. Gleichzeitig wird Umgebungsluft von einer Kühlflüssigkeit des Blockheizkraftwerks vorgewärmt und die erwärmte Umgebungsluft ebenfalls in der Mischvorrichtung der Luft beigemischt. Die derart erwärmte Luft wird im thermischen Trockner durch den Schlamm geleitet. Von der zirkulierenden Luft wird ein Teil abgezweigt und im Wärmetauscher dazu genutzt, Umgebungsluft vorzuwärmen, die dann als erwärmte Umgebungsluft in die Trocknungshalle und dort auf die Oberfläche des Schlamms geleitet wird.

Aufgabe der Erfindung ist es, eine Trocknungsanlage und ein Trocknungsverfahren der eingangs genannten Art anzugeben, die bzw. das sich durch einen hocheffizienten Wirkungsgrad und guter Umweltverträglichkeit auszeichnen.

Gelöst wird diese Aufgabe mit einer Trocknungsanlage gemäß Anspruch 1 oder einem Trocknungsverfahren gemäß Anspruch 11.

Durch die Verwendung einer Gasturbine als Wärmequelle kann durch Kraftwärmekopplung parallel zur Wärmegewinnung elektrische Energie über einen Generator mittels der Gasturbine erzeugt werden. Die im Abgas der Gasturbine enthaltene Wärme wird über einen Wärmetauscher auf ein gesondertes Hochtemperatur-Netz (Wärmemittelkreislauf) übertragen und die darin eingebrachte Wärme im Trocknungsraum zur Beheizung abgegeben. In diesem

Falle ist eine gesonderte Frischluftzufuhr für den Trocknungsraum erforderlich, wobei die Luft dann aus dem Trocknungsraum über eine Verbrennungsluftleitung ebenfalls zur Gasturbine geführt wird, so dass wiederum in der Gasturbine eine Abluftreinigung durch Mitverbrennung der abzureinigenden Bestandteile erfolgt.

In jedem Fall ist dabei in der Verbrennungsluftleitung stromabwärtig des Trockenraums ein Abluftwäscher vorgesehen. Somit werden in der abzuführenden Luft aus dem Trocknungsraum enthaltende Staub- und Lackpartikel sowie teils auch Lösungsmittel herausgewaschen. Das Waschwasser wird dann aus dem Abluftwäscher abgeführt und beispielsweise in einer biologischen Aufbereitung zur Wiederverwendung gereinigt. Die noch mit restlichen Lösungsmitteln belastete Abluft des Trocknungsraums wird sodann stromabwärtig des Abluftwäschers als Verbrennungsluft der Gasturbine zugeführt. Somit sind in dem Abluftwäscher etwaige in der Abluft enthaltene Partikel, die in der Gasturbine Schäden verursachen könnten, bereits effektiv abgefangen.

Entsprechend ist das eingangs genannte Trocknungsverfahren dadurch gekennzeichnet, dass die Verbrennungsluft nach der Luftwäsche gekühlt und danach geringfügig wieder erwärmt wird. Damit wird ein zu hoher Feuchtegehalt in der Verbrennungsluft durch Kondensation reduziert und nach geringfügigem Wiedererwärmen der Verbrennungsluft eine unerwünschte Tröpfchenbildung in der Gasturbine sicher vermieden aber gleichwohl die Effizienz der Gasturbine durch den Feuchtegehalt gesteigert.

Wenn in der Verbrennungsluftleitung stromabwärtig des Abluftwäschers eine erste Frischluftzufuhr vorgesehen ist, wird zur weiteren Kühlung und Bereitstellung von Verbrennungsluft Frischluft der rezirkulierten Verbrennungsluft zugemischt.

Dadurch, dass in der Verbrennungsluftleitung stromabwärtig des Trockenraums ein erster Wärmetauscher zum Kühlen der Verbrennungsluft vorgesehen ist, wobei am ersten Wärmetauscher ein erster Kühlkreislauf anliegt, wird eine weitere Kühlung der zur Gasturbine geleiteten Verbrennungsluft und damit eine Kondensation des hohen Feuchtegehaltes in der Verbrennungsluft erreicht.

Wenn ein zweiter Wärmetauscher in der Verbrennungsluftleitung stromabwärtig des ersten Wärmetauschers zum geringfügigen Wiedererwärmen der Verbrennungsluft vorgesehen ist, wird nachfolgende Kondensatbildung in der Verbrennungsluft durch Verringern der relativen Feuchte vermieden. Damit wird die Gasturbine vor Beschädigungen durch Tröpfchenbildung geschützt. Gleichwohl bewirkt der immer noch hohe Feuchtegehalt in der Verbrennungsluft eine Effizienzsteigerung der Gasturbine.

Um eine Überhitzung der Gasturbine zu vermeiden, ist ein zweiter Kühlkreislauf für die Gasturbine vorgesehen. Dieser zweite Kühlkreislauf kann bevorzugt eine Luftkühlung sein, die mittels einer Gebläseführung über wenigstens eine Wärmesenke geführt wird.

Wenn im zweiten Kühlkreislauf der zweite Wärmetauscher stromabwärtig der Gasturbine angeordnet ist, wird das geringfügige Wiedererwärmen der Verbrennungsluft (Vorerwärmung der Verbrennungsluft) mit der erwärmten Kühlluft des zweiten Kühlkreislaufs im Gegenstrom im als Luft/Luft-Wärmetauscher ausgebildeten zweiten Wärmetauscher erreicht.

Dadurch, dass im zweiten Kühlkreislauf stromabwärtig des zweiten Wärmetauschers ein dritter Wärmetauscher vorgesehen ist, an dem der erste Kühlkreislauf zum Kühlen des zweiten Kühlkreislaufs anliegt, wird der erste Kühlkreislauf als Wärmesenke am dritten Wärmetauscher zum Kühlen des zweiten Kühlkreislaufs (Kühlluft für die Gasturbine) verwendet.

Dadurch, dass zum Kühlen des ersten Kühlkreislaufs eine Wärmepumpe vorgesehen ist, die die dabei entstehende Wärme an ein Niedertemperatur-Netz abgibt, wird eine hohe Kühlleistung (niedrige Temperatur) im ersten Kühlkreislauf erreicht und die bei diesem Carnot-Prozess entstehende Wärme sinnvoll einem Niedertemperatur-Netz, beispielsweise für die Raumbeheizung, zugeführt.

Bevorzugt sind zwei oder mehr Gasturbinen parallel zueinander angeschlossen vorgesehen. Für die Durchführung eines besonders effizienten Trocknungsverfahrens ist es vorteilhaft, dass mehrere kleinere Gasturbinen (Mikrogasturbinen) eingesetzt werden, wobei die Anzahl der betriebenen Gasturbinen anhand der benötigten Wärmemenge gewählt wird. Damit wird erreicht, dass für die jeweils erforderliche Wärme nur gerade so viele Gasturbinen laufen, das diese im Bereich des optimalen Wirkungsgrades der einzelnen betriebenen Gasturbinen liegt, nämlich die jeweilige Gasturbine im optimalen Lastbereich betrieben wird.

Um optional bei etwaigen Ausfällen von einzelnen Gasturbinen die Versorgung mit Wärme sicherzustellen oder eine besonders feine Anpassung der Heizleistung zu ermöglichen, ist ein Heizkessel vorgesehen, der parallel zu der/den Gasturbine(n) angeschlossen ist.

In einer weiteren Ausgestaltung ist es bevorzugt, dass der vierte Wärmetauscher stromaufwärtig des Trocknungsraums in der Abgasleitung für ein Hochtemperatur-Netz vorgesehen ist.

Dadurch, dass in der Abgasleitung stromaufwärtig des Trocknungsraums eine Kaminleitung mit einer Bypass-Klappenkombination abzweigt, wobei der vierte Wärmetauscher an der Kaminleitung oder der Abgasleitung sowie ein fünfter Wärmetauscher für das NT-Netz und ein sechster Wärmetauscher für einen an der Wärmepumpe anliegenden Kaltwasserumlauf in Strömungsrichtung der Abgase an der Kaminleitung vorgesehen sind, werden auch die Abgase der Gasturbine und ggf. des Heizkessels thermisch verwertet, wenn die Trocknungsanlage nicht betrieben wird. In diesem Falle werden die Abgase über die Kaminleitung ins Freie geleitet.

Bevorzugt ist, dass alle Kompenenten der Trocknungsanlage mit Ausnahme des Trocknungsraums und den thermischen Zu- und Ableitungen dafür in einem Sondercontainer untergebracht sind. Der Container kann schnell aufgestellt und angeschlossen werden (plug-and-play) und erlaubt einen flexiblen Einsatz.

Nachfolgend werden drei Ausführungsbeispiele anhand der beiliegenden Fließschemata detailliert beschrieben:
Darin zeigt:
   - Fig. 1: ein Fließschema einer Trocknungsanlage in einem ersten Ausführungsbeispiel;
   - Fig. 2: ein Fließschema einer Trocknungsanlage in einem zweiten Ausführungsbeispiel und
   - Fig. 3: ein Fließschema einer Trocknungsanlage in einem dritten Ausführungsbeispiel.

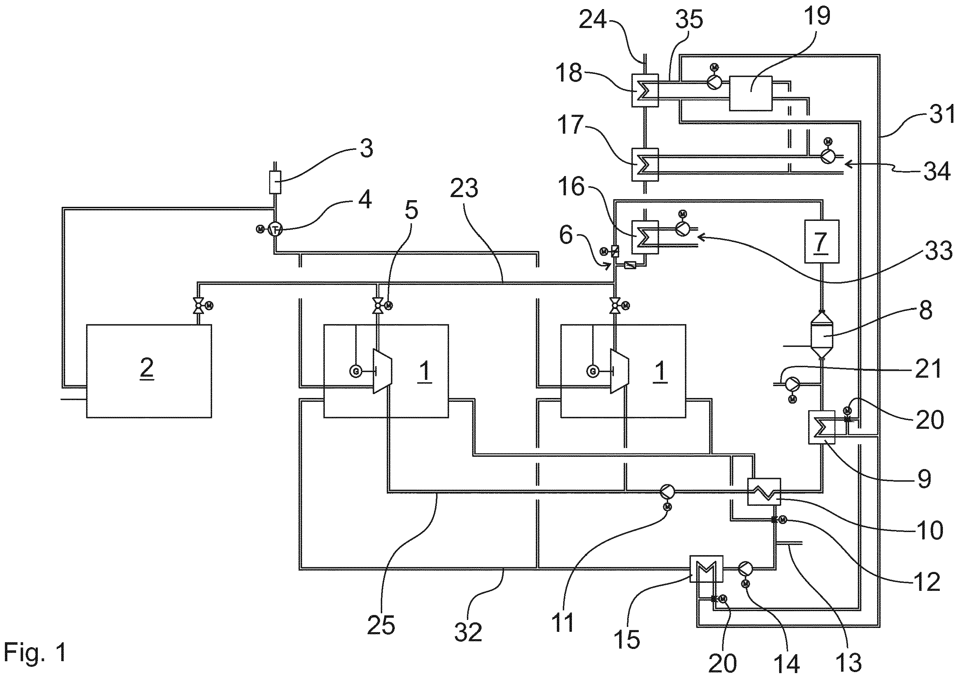

In Fig. 1 ist ein Fließschema einer erfindungsgemäßen Trocknungsanlage in einem ersten Ausführungsbeispiel dargestellt. An einem Gasanschluss ist über eine Gassicherheitsstrecke 3 eine Gasversorgung angeschlossen. Anschließend verzweigt sich die Gasleitung zu einem optional vorgesehenen herkömmlichen Gasheizkessel 2 als redundante Wärmeversorgung.

Der Hauptstrang der Gaszuleitung führt über einen Gasverdichter 4, der das zuströmende Gas auf einen für Gasturbinen erforderlichen Vordruck von beispielsweise 5 bar komprimiert. Stromabwärtig des Gasverdichters 4 führen Druckgasleitungen zu Mikrogasturbinen 1, im hier dargestellten Ausführungsbeispiel zwei parallel angeordnet. Selbstverständlich können auch eine, drei oder je nach Wärmebedarf noch weitere Gasturbinen parallel angeschlossen sein. Die mechanische Energie der Gasturbinen wird über nicht weiter dargestellte Generatoren in elektrische Energie, beispielsweise mit 400 V Ausgangsspannung, gewandelt.

Die Abgase der Gasturbinen 1 und ggf. des optionalen Gaskessels 2 sind über Absperrklappen 5 an einer gemeinsamen Abgasleitung 23 angeschlossen. Die Abgasleitung 23 führt stromabwärtig über eine Bypass-Klappenkombination 6 entweder in eine Kaminleitung 24 oder weiter über die Abgasleitung 23 zu einem Trocknungsraum 7, in dem die zu trocknenden Produkte direkt von den in der Abgasleitung 23 zugeführten Abgase erwärmt und getrocknet werden.

Da die zu trockenden Produkte in dem Trocknungsraum 7 Staub, Lackpartikel und Lösungsmittel abgeben, bildet sich eine entsprechend belastete Austauschluft aus der Trocknung, die stromabwärtig des Trocknungsraumes 7 über eine Verbindungsleitung zu einem Abluftwäscher 8 geführt wird. Im Abluftwäscher 8 wird Wasser fein vernebelt in den Luftstrom gesprüht, um alle Partikel, insbesondere Staub- und Lackpartikel, wie auch einige Bestandteile der Lösungsmittel aus der Luft auszuwaschen. Das Abwasser wird einer biologischen Aufbereitung zugeführt, wobei das gereinigte Abwasser wieder in den Abluftwäscher 8 rezirkuliert werden kann.

Stromabwärtig des Abluftwäschers 8 ist eine erste Frischluftzufuhr 21 vorgesehen, die bedarfsweise über ein Zuführgebläse Frischluft der im Abluftwäscher 8 vorbehandelten Abluft beimischt. Dieses Luftgemisch bildet nun die Verbrennungsluft für die Gasturbinen 1.

Zur Führung der Verbrennungsluft ist eine Verbrennungsluftleitung 25 vorgesehen, die in Strömungsrichtung der Verbrennungsluft zunächst einen ersten Wärmetauscher 9 und nachfolgend einen zweiten Wärmetauscher 10 in Form eines Luft-Luft-Wärmetauschers und nachfolgend ein Gebläse 11 zum Komprimieren der Verbrennungsluft enthält. Die Verbrennungsluftleitung 25 führt dann zu den Gasturbinen 1, wobei die Verbrennungsluft zusammen mit dem über die Gasdruckleitungen zugeführten Gas den Gasturbinen zur Verbrennung zugeführt wird.

Um eine Überhitzung der Gasturbinen 1 zu vermeiden, ist ein zweiter Kühlkreislauf 32 in Form einer Luftkühlung vorgesehen, bei der Kühlluft in diesem zweiten Kühlkreislauf 32 dem Gehäuse der Gasturbine 1 zur Umspülung zugeführt wird und die erwärmte Kühlluft über eine weitere Leitung des Kühlkreislaufs 32 dem Luft-Luft-Wärmetauscher 10 zugeführt wird. In diesem zweiten Wärmetauscher 10 gibt die im zweiten Kühlkreislauf 32 von den Gasturbinen 1 erwärmte Kühlluft Wärme an die zur Verbrennung in der Gasturbine 1 zugeführte Verbrennungsluft ab. Optional kann dieser Wärmetauscher über eine Bypass-Leitung mit einem Bypass-Regelventil 12 zur Regelung einer optimalen Verbrennungslufttemperatur variabel umgeleitet werden. Bedarfsweise ist im zweiten Kühlkreislauf 32 eine dritte Frischluftzufuhr 13 vorgesehen. Weiter führt der zweite Kühlkreislauf 32 über ein Kühlluftgebläse 14 zu einem dritten Wärmetauscher 15, wo die zugeführte Kühlluft auf die gewünschte Kühltemperatur abgekühlt wird.

Die vorangehend beschriebene Kaminleitung 24, die von der Abgasleitung 23 mit einer Bypass-Klappenkombination 6 abzweigt, dient zur Umleitung der Abgase, falls die Abgase nicht in den Trocknungsraum 7 eingeleitet werden können. In der Kaminleitung 24 ist zunächst ein vierter Wärmetauscher 16 angeordnet, der ein optionales Hochtemperatur-Netz 33 mit Wärme versorgt. Das Hochtemperatur-Netz 33 kann beispielsweise Wasser als Wärmeträgermedium enthalten und mit einer Temperatur von 90°C betrieben werden. Strömungsabwärtig vom vierten Wärmetauscher 16 ist ein fünfter Wärmetauscher 17 angeordnet, der Wärme an ein Niedertemperatur-Netz 34 abgibt, das wiederum Wasser als Wärmeträgermedium enthält und in einem Temperaturbereich von ca. 60°C, beispielsweise für eine Raumbeheizung betrieben wird. Stromabwärtig des fünften Wärmetauschers 17 ist ein sechster Wärmetauscher 18 vorgesehen, an dem Wärme in einem Temperaturbereich von 20°C bis 30°C über einen Kaltwasserumlauf 35 an einen ersten Kühlkreislauf 31 abgegeben wird. Entsprechend verlassen die Abgase die Kaminleitung 24 mit sehr geringer Temperatur (20°C bis 40°C).

Der erste Kühlkreislauf 31 enthält ebenfalls Wasser als Wärmeträgermedium, wobei die Vorlaufleitung des ersten Kühlkreislaufs 31 mit dem Kaltwasser zu dem ersten Wärmetauscher 9 und parallel zum dritten Wärmetauscher 15 geführt wird. Die jeweilig an den Wärmetauschern 9 bzw. 15 erforderliche Kühlleistung ist über Wasserkühlungsregelventile 20 regelbar. In der Rückleitung des ersten Kühlkreislaufs 31 wird das erwärmte Kühlwasser einer Wärmepumpe 19 zusammen mit dem erwärmten Kaltwasser des Kaltwasserumlaufs 35 vom sechsten Wärmetauscher 18 zugeführt. Die Wärmepumpe kühlt das Kühlwasser des ersten Kühlkreislaufs 31 ab und gibt die dabei entstehende Wärme an das Niedertemperatur-Netz 34 zur Raumbeheizung ab. Diese Ausführung ist bevorzugt, solange im NT-Netz 34 ein ausreichend großer Wärmebedarf (Wärmesenke) besteht.

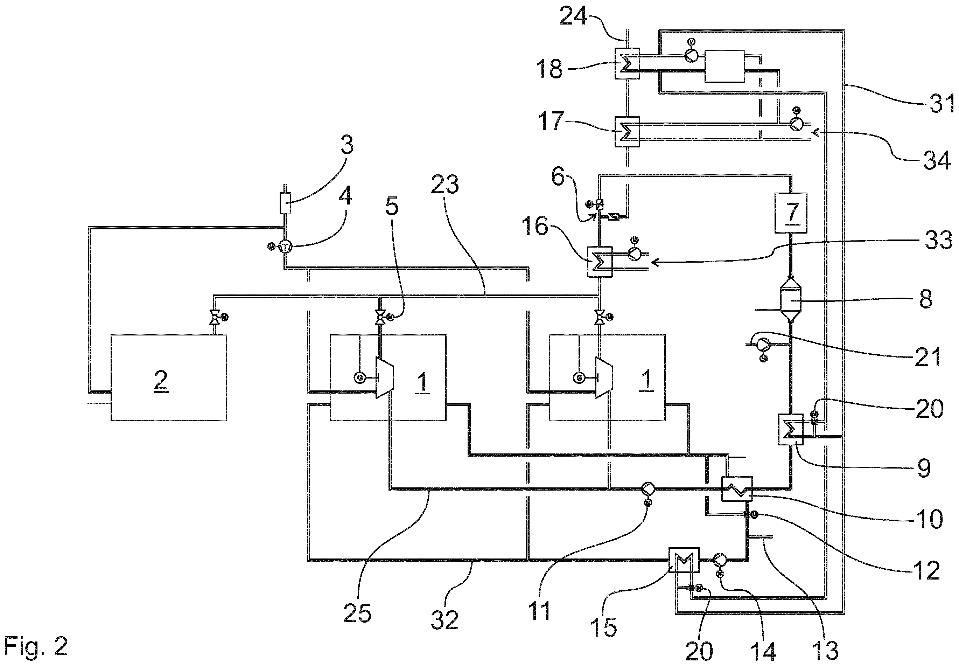

In Fig. 2 ist ein Fließschema einer erfindungsgemäßen Trocknungsanlage in einem zweiten Ausführungsbeispiel dargestellt. Gleiche Bauteile sind mit gleichen Bezugszeichen versehen. Im Unterschied zum ersten Ausführungsbeispiel wird das Abgas der Gasturbinen und ggf. des Gaskessels in einem vorgekühlten Zustand dem Trocknungsraum 7 zugeführt. Dazu ist der vierte Wärmetauscher 16 für das Hochtemperatur-Netz 33 direkt in der Abgasleitung 23 vor dem Abzweig in Form der Bypass-Klappenkombination 6 zur Kaminleitung 24 angeordnet. Mit diesem vierten Wärmetauscher 16 wird somit das Abgas auf ca. 110°C abgekühlt und das im Hochtemperatur-Netz 33 zirkulierte Wärmeträgermedium (Wasser) auf ca. 90°C erwärmt.

Im Übrigen stimmt der Aufbau der Trocknungsanlage gemäß Fig. 2 mit der gemäß Fig. 1 überein.

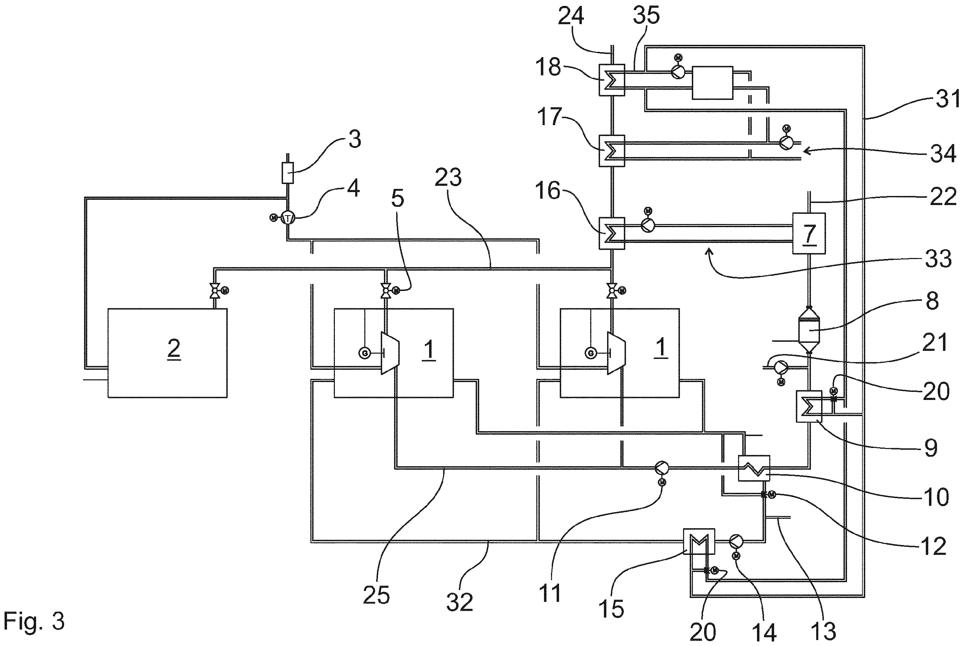

In Fig. 3 ist ein Fließschema einer erfindungsgemäßen Trocknungsanlage in einem dritten Ausführungsbeispiel beschrieben, bei der der Trocknungsraum 7 nicht direkt über die Abgase, sondern indirekt hydraulisch beheizt wird. Dazu führt die Abgasleitung 23 direkt in die Kaminleitung 24, womit die Bypass-Klappenkombination 6 entfällt. Das Hochtemperatur-Netz 33 überträgt dabei die für die Trocknung erforderliche Wärme vom vierten Wärmetauscher 16, durch den die heißen Abgase der Gasturbinen 1 und ggf. des Gaskessels 2 strömen, und erwärmt den Trocknungsraum 7 hydraulisch. Entsprechend wird dem Trocknungsraum 7 direkt Frischluft über eine zweite Frischluftzufuhr 22 zugeführt, die dann in der bekannten Weise als mit Staub, Lackpartikeln und Lösungsmitteln beladene Austauschluft weiterbehandelt wird.

Im Übrigen stimmt der Aufbau der Trocknungsanlage gemäß Fig. 3 mit der gemäß Fig. 1 überein.

Die Anlage kann als dezentrale Wärmeversorgung für einen Trocknungsraum in einem Sondercontainer aufgebaut sein, in dem die Gasturbine, der Verdichter, die hydraulische Nutzung der thermischen Energie bis zu Übergabepunkten, die Wärmerückgewinnung der Kühlluft und die Steuerung untergebracht ist. Je nach Ausführungsbeispiel bleibt somit lediglich der Anschluss der zum Trocknungsraum 7 führenden Hin- und Rückleitungen, nämlich Abgasleitung 23 und Austauschluftleitung oder bei hydraulischer Beheizung gemäß drittem Ausführungsbeispiel der hydraulische Anschluss des Hochtemperatur-Netzes 33 sowie der Anschluss des hydraulischen Niedertemperatur-Netzes 34 als erforderliche Wärmesenke, beispielsweise für die Raumbeheizung.

Das besondere an der erfindungsgemäßen Trocknungsanlage liegt in der Kombination einer Gasturbine zur Wärmeversorgung des Trocknungsraums bei gleichzeitiger Erzeugung elektrischer Energie im Rahmen einer Kraftwärmekoppplung und der Verbrennung der in der Austauschluft enthaltenen flüchtigen, gesundheitsgefährdenden Bestandteile in der Gasturbine. Die besonders hohe energetische Effizienz wird durch die Wärmerückgewinnung aus der Kühlluft und Verbrennungsluft erreicht. Durch das Verwenden einer Wärmepumpe wird die im Kaltwasser gewonnene Wärmeenergie auf Niedertemperaturniveau übertragen, da dort in der Regel eine ausreichend große Wärmesenke, beispielsweise für Raumbeheizung und/oder Brauchwassererwärmung genutzt werden kann. In diesem Falle erfüllt die Gesamtanlage das Hocheffizienzkriterium mit einem Wirkungsgrad von über 90 %. Die Primärenergieeinsparung liegt somit bei über 20 %.

### Bezugszeichenliste

- 1: Gasturbine
- 2: Kessel
- 3: Gassicherheitsstrecke
- 4: Gasverdichter (5 bar(ü))
- 5: Absperrklappe
- 6: Bypass-Klappenkombination
- 7: Trocknungsraum
- 8: Abluftwäscher
- 9: erster Wärmetauscher
- 10: zweiter (Luft-Luft-) Wärmetauscher
- 11: Gebläse für Verbrennungsluft
- 12: Bypass-Regelventil
- 13: dritte Frischluftzufuhr
- 14: Kühlluftgebläse
- 15: dritter Wärmetauscher
- 16: vierter Wärmetauscher
- 17: fünfter Wärmetauscher
- 18: sechster Wärmetauscher
- 19: Wärmepumpe
- 20: Wasserkühlungsregelventil
- 21: erste Frischluftzufuhr
- 22: zweite Frischluftzufuhr
- 23: Abgasleitung
- 24: Kaminleitung
- 25: Verbrennungsluftleitung
- 31: erster Kühlkreislauf
- 32: zweiter Kühlkreislauf
- 33: Hochtemperatur-Netz (HT-Netz)
- 34: Niedertemperatur-Netz (NT-Netz)
- 35: Kaltwasserumlauf

## Patentansprüche

1. Trocknungsanlage mit Wärmequelle, Trocknungsraum (7) und Abluftreinigung, wobei die Wärmequelle eine Gasturbine (1) mit Abgasleitung (23) ist und vom Trocknungsraum (7) eine Verbrennungsluftleitung (25) zu der Gasturbine (1) führt, wobei die Abluftreinigung durch das Mitverbrennen der abzureinigenden Bestandteile stromabwärtig des Trockenraums (7) in der Gasturbine (1) erfolgt und in der Abgasleitung (23) ein vierter Wärmetauscher (16) angeordnet ist, der Wärme auf ein HT-Netz (33) überträgt und das HT-Netz (33) den Trocknungsraum (7) beheizt, wobei eine zweite Frischluftzufuhr (22) für den Trocknungsraum (7) vorgesehen ist und in der Verbrennungsluftleitung (25) stromabwärtig des Trockenraums (7) ein Abluftwäscher (8) vorgesehen ist sowie in der Verbrennungsluftleitung (25) stromabwärtig des Trockenraums (7) ein erster Wärmetauscher (9) zum Kühlen der Verbrennungsluft vorgesehen ist, wobei am ersten Wärmetauscher (9) ein erster Kühlkreislauf (31) anliegt, **dadurch gekennzeichnet, dass** ein zweiter Wärmetauscher (10) in der Verbrennungsluftleitung (25) stromabwärtig des ersten Wärmetauschers (9) zum geringfügigen Wiedererwärmen der Verbrennungsluft vorgesehen ist, um nachfolgende Kondensatbildung in der Verbrennungsluft durch Verringern der relativen Feuchte zu vermeiden.

2. Trocknungsanlage nach Anspruch 1, **dadurch gekennzeichnet, dass** der vierte Wärmetauscher (16) stromaufwärtig des Trocknungsraums (7) in der Abgasleitung (23) für ein HT-Netz (33) vorgesehen ist.

3. Trocknungsanlage nach einem der vorangehenden Ansprüche,
**dadurch gekennzeichnet, dass** ein zweiter Kühlkreislauf (32) für die Gasturbine (1) vorgesehen ist.

4. Trocknungsanlage nach Anspruch 3, **dadurch gekennzeichnet, dass** im zweiten Kühlkreislauf (32) der zweite Wärmetauscher (10) stromabwärtig der Gasturbine (1) angeordnet ist.

5. Trocknungsanlage nach Anspruch 4, **dadurch gekennzeichnet, dass** im zweiten Kühlkreislauf (32) stromabwärtig des zweiten Wärmetauschers (10) ein dritter Wärmetauscher (15) vorgesehen ist, an dem der erste Kühlkreislauf (31) zum Kühlen des zweiten Kühlkreislaufs (32) anliegt.

6. Trocknungsanlage nach einem der Ansprüche 1 bis 5, **dadurch gekennzeichnet, dass** zum Kühlen des ersten Kühlkreislaufs (31) eine Wärmepumpe (19) vorgesehen ist, die die dabei entstehende Wärme an ein NT-Netz (34) abgibt.

7. Trocknungsanlage nach Anspruch 6, **dadurch gekennzeichnet, dass** in der Abgasleitung (23) stromaufwärtig des Trocknungsraums (7) eine Kaminleitung (24) mit einer Bypass-Klappenkombination (6) abzweigt, wobei der vierte Wärmetauscher (16) an der Kaminleitung (24) oder der Abgasleitung (23) sowie ein fünfter Wärmetauscher (17) für das NT-Netz (34) und ein sechster Wärmetauscher (18) für einen an der Wärmepumpe (19) anliegenden Kaltwasserumlauf (35) in Strömungsrichtung der Abgase an der Kaminleitung (24) vorgesehen sind.

8. Trocknungsanlage nach einem der vorangehenden Ansprüche,
**dadurch gekennzeichnet, dass** in der Verbrennungsluftleitung (25) stromabwärtig des Abluftwäschers (8) eine erste Frischluftzufuhr (21) vorgesehen ist.

9. Trocknungsanlage nach einem der vorangehenden Ansprüche,
**dadurch gekennzeichnet, dass** zwei oder mehr Gasturbinen (1) parallel zueinander angeschlossen vorgesehen sind.

10. Trocknungsanlage nach einem der vorangehenden Ansprüche, **dadurch gekennzeichnet, dass** ein Heizkessel (2) vorgesehen ist, der parallel zu der/den Gasturbine(n) (1) angeschlossen ist.

11. Trocknungsverfahren in einer Trocknungsanlage nach einem der Ansprüche 1 bis 10 für Lackierereien, bei dem
- die zum Trocknen erforderliche Wärme mit einer Gasturbine erzeugt wird, wobei ein Trocknungsraum der Trocknungsanlage indirekt hydraulisch beheizt und mit der Antriebsleistung der Gasturbine elektrischer Strom generiert wird, und
- die beim Trocknen entstehende Austauschluft mit den darin aufgenommenen, abzureinigenden Bestandteilen der Gasturbine als Verbrennungsluft zugeführt wird, wobei die Verbrennungsluft vor dem Zuführen zur Gasturbine gewaschen wird,
**dadurch gekennzeichnet, dass** die Verbrennungsluft nach der Luftwäsche gekühlt und danach geringfügig wieder erwärmt wird, um nachfolgende Kondesatbildung in der Verbrennungsluft durch Verringern der relativen Feuchte zu vermeiden.

## Claims

1. Drying plant with heat source, drying chamber (7) and exhaust air purification, wherein the heat source is a gas turbine (1) with exhaust gas line (23) and a combustion air line (25) leads from the drying chamber (7) to the gas turbine (1), wherein the exhaust air purification is carried out by the co-incineration of the components to be purified downstream of the drying chamber (7) in the gas turbine (1), and in the exhaust gas line (23) a fourth heat exchanger (16) is arranged, which transmits heat to a HT-network (33) and the HT-network (33) heats the drying chamber (7), wherein a second fresh air supply (22) is provided for the drying chamber (7) and an exhaust air washer (8) is provided in the combustion air line (25) downstream of the drying chamber (7), and a first heat exchanger (9) for cooling the combustion air is provided in the combustion air line (25) downstream of the drying chamber (7), wherein a first cooling circuit (31) is connected to the first heat exchanger (9), **characterised in that** a second heat exchanger (10) is provided in the combustion air line (25) downstream of the first heat exchanger (9) for slight re-heating of the combustion air in order to avoid subsequent condensation formation in the combustion air by reducing the relative moisture.

2. Drying plant according to claim 1, **characterised in that** the fourth heat exchanger (16) is provided upstream of the drying chamber (7) in the exhaust gas line (23) for a HT-network (33).

3. Drying plant according to one of the preceding claims, **characterised in that** a second cooling circuit (32) is provided for the gas turbine (1).

4. Drying plant according to claim 3, **characterised in that** in the second cooling circuit (32) the second heat exchanger (10) is arranged downstream of the gas turbine (1).

5. Drying plant according to claim 4, **characterised in that** in the second cooling circuit (32) there is provided downstream of the second heat exchanger (10) a third heat exchanger (15), to which the first cooling circuit (31) for cooling the second cooling circuit (32) is connected.

6. Drying plant according to one of claims 1 to 5, **characterised in that** for cooling the first cooling circuit (31) a heat pump (19) is provided, which emits the resulting heat to an LT-network (34).

7. Drying plant according to claim 6, **characterised in that** in the exhaust gas line (23) upstream of the drying chamber (7) a chimney line (24) with a bypass flap combination (6) branches off, wherein the fourth heat exchanger (16) at the chimney line (24) or at the exhaust gas line (23), and a fifth heat exchanger (17) for the LT-network (34) and a sixth heat exchanger (18) for a cold water circulation (35) connected to the heat pump (19) are provided in the flow direction of the exhaust gases at the chimney line (24).

8. Drying plant according to one of the preceding claims, **characterised in that** a first fresh air supply (21) is provided in the combustion air line (25) downstream of the exhaust air washer (8).

9. Drying plant according to one of the preceding claims, **characterised in that** two or more gas turbines (1) are provided connected parallel to one another.

10. Drying plant according to one of the preceding claims, **characterised in that** a heating boiler (2) is provided, which is connected parallel to the gas turbine(s) (1).

11. Drying process in a drying plant according to one of claims 1 to 10 for paint shops, in which
- the heat required for drying is produced with a gas turbine, wherein a drying chamber of the drying plant is indirectly hydraulically heated and with the drive power of the gas turbine electric current is generated, and
- the exchange air resulting on drying, with the components taken up therein and to be purified, is fed as combustion air to the gas turbine, wherein the combustion air is washed before being fed to the gas turbine,
**characterised in that** the combustion air is cooled after the air wash and then slightly re-heated in order to avoid subsequent condensation formation in the combustion air by reducing the relative moisture.

## Revendications

1. Installation de séchage comprenant une source de chaleur, une chambre de séchage (7) et un lavage de l'air vicié, la source de chaleur étant une turbine à gaz (1) comprenant une conduite de gaz d'échappement (23) et une conduite d'air de combustion (25) menant de la chambre de séchage (7) à la turbine à gaz (1), le lavage de l'air vicié étant réalisé dans la turbine à gaz (1) par co-combustion des composants à laver en aval de la chambre de séchage (7), et un quatrième échangeur de chaleur (16) étant disposé dans la conduite des gaz d'échappement (23), lequel transfère la chaleur à un réseau haute température (33) et le réseau haute température (33) chauffe la chambre de séchage (7), une deuxième arrivée d'air frais (22) étant prévue pour la chambre de séchage (7) et un épurateur d'air vicié (8) étant prévu dans la conduite d'air de combustion (25) en aval de la chambre de séchage (7) et un premier échangeur de chaleur (9) servant à refroidir l'air de combustion étant prévu dans la conduite d'air de combustion (25) en aval de la chambre de séchage (7), un premier circuit de refroidissement (31) étant raccordé au premier échangeur de chaleur (9), **caractérisée en ce qu'un** deuxième échangeur de chaleur (10) est prévu dans la conduite d'air de combustion (25) en aval du premier échangeur de chaleur (9) pour réchauffer légèrement l'air de combustion, afin d'éviter la formation de condensation, qui en découle, dans l'air de combustion par réduction de l'humidité relative.

2. Installation de séchage selon la revendication 1, **caractérisée en ce que** le quatrième échangeur de chaleur (16) est prévu dans la conduite des gaz d'échappement (23) en amont de la chambre de séchage (7) pour un réseau haute température (33).

3. Installation de séchage selon l'une des revendications précédentes, **caractérisé en ce qu'un** deuxième circuit de refroidissement (32) est prévu pour la turbine à gaz (1).

4. Installation de séchage selon la revendication 3, **caractérisée en ce que** le deuxième échangeur de chaleur (10) est placé dans le deuxième circuit de refroidissement (32) en aval de la turbine à gaz (1).

5. Installation de séchage selon la revendication 4, **caractérisée en ce qu'un** troisième échangeur de chaleur (15) est prévu dans le deuxième circuit de refroidissement (32) en aval du deuxième échangeur de chaleur (10) et auquel est raccordé le premier circuit de refroidissement (31) servant à refroidir le deuxième circuit de refroidissement (32).

6. Installation de séchage selon l'une des revendications 1 à 5, **caractérisée en ce qu'une** pompe à chaleur (19) est prévue pour refroidir le premier circuit de refroidissement (31), laquelle pompe délivre à un réseau basse température (34) la chaleur produite à cette occasion.

7. Installation de séchage selon la revendication 6, **caractérisée en ce qu'un** conduit de cheminée (24), présentant une combinaison de clapets de dérivation (6), part de la conduite des gaz d'échappement (23) en amont de la chambre de séchage (7), le quatrième échangeur de chaleur (16) étant prévu sur le conduit de cheminée (24) ou sur la conduite des gaz d'échappement (23), et un cinquième échangeur de chaleur (17) pour le réseau basse température (34) ainsi qu'un sixième échangeur de chaleur (18) pour une circulation d'eau froide (35) raccordé à la pompe à chaleur (19) étant prévus sur le conduit de cheminée (24) dans le sens d'écoulement des gaz d'échappement.

8. Installation de séchage selon l'une des revendications précédentes, **caractérisée en ce qu'une** première arrivée d'air frais (21) est prévue dans la conduite d'air de combustion (25) en aval de l'épurateur d'air vicié (8).

9. Installation de séchage selon l'une des revendications précédentes, **caractérisée en ce que** deux turbines à gaz (1) ou plus sont prévues, lesquelles sont raccordées en parallèle.

10. Installation de séchage selon l'une des revendications précédentes, **caractérisée en ce qu'il** est prévu une chaudière de chauffage (2) qui est raccordée en parallèle à la ou les turbines à gaz (1).

11. Procédé de séchage dans une installation de séchage selon l'une des revendications 1 à 10 pour des ateliers de peintures, dans lequel
- la chaleur nécessaire au séchage est produite par une turbine à gaz, une chambre de séchage de l'installation de séchage étant chauffée indirectement de façon hydraulique et du courant électrique étant généré à l'aide de la puissance d'entraînement de la turbine à gaz, et
- l'air d'échange produit lors du séchage et contenant les composants à nettoyer est amené à la turbine à gaz sous la forme d'un air de combustion, l'air de combustion étant épuré avant d'être amené à la turbine à gaz,
**caractérisé en ce que** l'air de combustion est refroidi après épuration de l'air puis à nouveau légèrement réchauffé, afin d'éviter la formation de condensation, qui en découle, dans l'air de combustion par réduction de l'humidité relative.
